# EUROPÄISCHE PATENTANMELDUNG

(11) **EP 0 843 116 A2**
(43) Veröffentlichungstag der Anmeldung: **20.05.1998**
(21) Anmeldenummer: 97119578.9
(22) Anmeldetag: 19.11.1997
(51) Int. Cl.: F16K 5/06, F16K 5/12

(54) **Vorfluthahn**

(30) Priorität: 25.02.1997 DE 19707534; 19.11.1996 DE 19647872
(71) Anmelder: Stolco Stoltenberg-Lerche GmbH & Co. KG, 40212 Düsseldorf (DE); Pister Kugelhähne GmbH, 76461 Muggensturm (DE)
(72) Erfinder: Seelbach, Jochen, 40479 Düsseldorf (DE); Jung, Kurt, 76479 Steinmauern (DE)
(74) Vertreter: COHAUSZ HASE DAWIDOWICZ & PARTNER

(57) **Zusammenfassung**

Absperrorgan mit einem Gehäuse 1, in dem ein Schließteil 6 drehbar gelagert und mit einem Stellgriff 9 von einer Schließstellung in eine Öffnungsstellung überführbar ist, wobei das Schließteil einen Durchgangskanal 7 aufweist, der in der Öffnungsstellung zwei in das Gehäuse 1 eingebrachte Hauptkanäle 4 und 5 verbindet, wobei in das Schließteil 6 eine durchgängige Vorflutbohrung 27 oder im Mündungsbereich des Durchgangskanales eine Ausnehmung 12 eingebracht ist, wobei die Vorflutbohrung 27 oder die Ausnehmung 12 eine Vorabverbindung für das Medium bilden, wenn sich das Schließteil 6 in einer Zwischenstellung zwischen der Öffnungs- und der Schließstellung befindet, wobei die Zwischenstellung durch ein Verriegelungsorgan 15 definiert ist, das die Bewegung des Schließteils 6 von der Zwischen- in die Öffnungsstellung blockiert und das von einer sperrenden in eine entsperrende Stellung überführbar ist und wobei der Durchmesser der Vorflutbohrung 27 kleiner ist als der Durchmesser des Durchgangskanals 7.

## Beschreibung

Die Erfindung betrifft ein Absperrorgan mit einem Gehäuse, in den ein Schließteil (Hahnküken) drehbar gelagert und mit einem Stellgriff von einer Schließstellung in eine Öffnungsstellung überführbar ist, wobei das Schließteil einen Durchgangskanal aufweist, der in der Öffnungsstellung zwei in das Gehäuse eingebrachte Hauptkanäle verbindet.

Derartige Absperrorgane sind als Absperrhähne oder Drehschieber bekannt. Sie zeichnen sich durch eine einfache und robuste Bauweise sowie durch einen geringen Platzbedarf aus. Nachteilig an den bekannten Absperrorganen ist, daß sie kaum eine Feineinstellung des Durchflusses zulassen. Insbesondere, wenn derartige Absperrorgane für unter hohem Druck stehende Medien wie beispielsweise Dampf eingesetzt werden, bewirkt schon eine kleine Öffnungsbewegung, daß die Hinterdruckseite schlagartig mit dem Arbeitsdruck belastet wird. Wenn an der Hinterdruckseite eines solchen Absperrorganes ein flexibler Schlauch angebracht ist, so bewirkt die plötzliche Druckbelastung des Schlauches eine Versteifung, die zu gefährlichen Ausschlägen führt, durch die das Bedienpersonal verletzt werden kann.

Aufgabe der Erfindung ist es daher, ein Absperrorgan zu schaffen, das im Umgang mit unter hohem Druck stehenden Medien, insbesondere Dampf einsetzbar ist und das bei einfacher Konstruktion die Gefahr einer plötzlichen Druckbeaufschlagung der Hinterdruckseite mindert.

Diese Aufgabe wird durch Absperrorgane nach den Ansprüchen 1 oder 5 gelöst.

Mit dem erfindungsgemäßen Absperrorgan (Vorfluthahn) wird ein sicherer Umgang mit unter hohem Druck stehenden Medien ermöglicht, da über eine Vorabverbindung mit einem geringen Öffnungs- bzw. Strömungsquerschnitt, der weniger als 20% insbesondere etwa 15% des Strömungsquerschnittes des Haupt- oder Duchgangskanals hat, ein zwangsläufiges Vorfluten der Nachlaufleitung geschieht. Die Vorabverbindung wird entweder durch eine Vorflutbohrung, die in das Schließteil eingebracht ist, oder durch eine Ausnehmung in einer der Seitenwandungen in den Mündungsbereichen geschaffen.

Der Vorfluthahn hat ein ein Verriegelungsorgan, das ein unbeabsichtigtes schnelles Öffnen über die die Zwischenstellung (Vorflutstellung) hinaus verhindert. Das Verriegelungsorgan blockiert die Bewegung des Schließteils, wenn dieses von der Zwischen- in die Öffnungsstellung überführt wird. Bevor es möglich ist, das Schließteils von der Vorflut- in die Öffnungsstellung, zu überführen, muß zunächst das Verriegelungsorgan von einer sperrenden in eine entsperrende Stellung gebracht werden. Bevor das Verriegelungsorgan betätigt wird, ist jedoch der Druck auf der Hinterdruckseite langsam aufgebaut worden, so daß es beim vollständigen Öffnen des Hahnes nicht mehr zu unkontrollierbaren Druckstößen und zum schlagartigen Freiwerden von Werkstoffspannungen in Folge der großen Temperaturdifferenz kommen kann.

Das Verriegelungsorgan kann in einer besonderen Ausführungsform durch Drücken oder Ziehen des Stellgriffes, der an dem Druckknopf angreift entsperrt werden, wobei der Druckknopf durch eine Kippbewegung des Stellgriffes eindrückbar ist.Bei einer anderen vorteilhaften Form des Vorflutventiles ist das Verriegelungsorgan so angebracht, daß die Bedienperson beide Hände zum Öffnen einsetzen muß, während das Schließen durch einfaches Umlegen des Stellhebels und ohne Beeinträchtigung durch das Verriegelungsorgan geschieht.

Vorteilhaft ist, daß der Vorfluthahn von besonders einfacher Konstruktion und deswegen besonders günstig in seiner Herstellung ist. Außerdem lassen sich alle Bauteile des Vorfluthahns leicht auswechseln. Es ist sogar möglich, herkömmliche Absperrhähne mit dem das erfindungsgemäßen Schließteil (Hahnküken) und dem Verriegelungsorgan nachzurüsten.

Der Vorfluthahn läßt sich besonders vorteilhaft im Umgang mit Wasserdampf einsetzen, da er aufgrund seiner Funktion die entsprechenden Sicherheitsnormen erfüllt. Insbesondere läßt sich mit dem Vorfluthahn Dampf unter einem Druck von 18 bar und 210°C sicher kontrollieren. Dabei wird der Vorfluthahn vorteilhafterweise zum Absperren von flexiblen Druckschläuchen verwendet. Bei solchen Druckschläuchen ist die Funktion des Vorflutens besonders wichtig, da durch den langsamen Druckaufbau in Schlauch ein unkontrollierbares Ausschlagen verhindert werden kann, so daß die Gefahr für das Bedienpersonal erheblich gemindert ist. Der Vorfluthahn als Sicherheitskugelhahn läßt sich vorteilhafterweise beim Umgang mit Medien wie Druckluft, Stickstoff, Wasser und Wasserdampf einsetzen.

Der langsame Druckaufbau in der Hinterdruckseite trägt außerdem zu einer Reduzierung der Belastung der an die Hinterdruckseite angeschlossenen Armaturen und Bauteile bei. So reduziert die Verwendung des Vorfluthahnes den Verschleiß nachfolgender Dichtungen wie sie beispielsweise in angeschlossenen Spritzpistolen zu finden sind. Zudem ist vorteilhaft, daß sich die Hinterdruckseite beim Vorfluten nur langsam erwärmt, so daß auch die thermische Materialbeanspruchung reduziert ist.

Bei bestimmten Einsatzgebieten kann es vorteilhaft sein, den Vorflutkanal durch eine Ausnehmung an der Mündung des Einlaß- und/oder Auslaßkanals zu bilden. Zur Regulierung heißen Dampfes hat sich eine besondere Ausführungsform bewährt, bei der der Vorflutkanal im Mündungsbereich der durch das Hahnküken verlaufenden Durchlaßbohrung eingebracht ist. In einer besonders einfachen Ausführungsform ist die Ausnehmung eine Nut, die in einer Ebene senkrecht zur Drehachse des Schließteiles schräg in die Seitenwandung im Mündungsbereich eingebracht insbesondere eingefräst ist. In einer besonderen Ausführungsform ist sowohl am Einlaß als auch am Auslaß des Durchgangskanals eine Ausnehmung in die Seitenwandung eingebracht, so daß auf beiden Seiten Vorflutkanäle vorhanden sind.

Wird der Vorflutkanal von einer Ausnehmung in einer der Seitenwandungen im Mündungsbereich gebildet, ist es vorteilhaft, wenn der Durchgangskanal als konische sich in Durchlaßrichtung verjüngende Bohrung durch das Schließteil verläuft. Ist außerdem die Ausnehmung in die Wandung der Austrittsöffnung, die durch das verjüngte Ende gebildet wird, eingebracht,so wird die Dichtung des Vorfluthahnes besonders geschützt.

Besonders effektiv werden jedoch die Dichtungen durch einen Vorflutkanal geschont, der als durchgängige Bohrung durch das Schließteil verläuft. Dabei sind sowohl die Durchgangsöffnung als auch der Vorflutkanal Bohrungen gleichbleibenden Querschnittes. In der Zwischenstellung verbindet der Vorflutkanal die Hauptkanäle, während die Durchgangsöffnung von den Wänden des Ventilsitzes verschlossen ist. In dieser Stellung dichten die Dichtungen gegen die Wand des Schließteiles ab. Beim Öffnen wird keine der Dichtung über die Durchgangsöffnung mit dem gesamten Druck beaufschlagt, so daß eine gute Materialschonung gewährleistet ist.

Besonders vorteilhaft ist es, den erfindungsgemäßen Vorfluthahn als sogenannten 3/2-Wege oder auch 3/3-Wege Hahn auszubilden. Ein solcher 3/2- oder 3/3- Wege Hahn hat eine Entlastungsbohrung im Küken, die insbesondere senkrecht vom Hauptkanal ausgeht. Über diese Entlastungsbohrung wird der Hinterdruck abgebaut, da das Medium bei geschlossenem Hahn zurück in den Hauptkanal strömen kann und von dort über eine Entlastungsöffnung im Gehäuse entweicht. Somit ist eine Druckentlastung des Kugelhahnnachlaufes bei abgesperrtem Hauptstrang über einen getrennten Ausgang gegeben. Besonders vorteilhaft ist dabei eine positive Überdeckung der Schaltfunktion, bei der die Druckentlastung erst geöffnet wird, wenn der Hauptstrang geschlossen ist.

Ausführungsbeispiele des erfindungsgemäßen Vorfluthahnes sind in den Zeichnungen dargestellt und werden im folgenden näher beschrieben.

Es zeigen:
- **Fig. 1**: einen Vorfluthahn mit Vorflutkanal (Draufsicht) in Öffnungsstellung,
- **Fig. 2**: ein Küken mit Vorflutkanal in Zwischenstellung (Vorflutstellung),
- **Fig. 3**: einen Vorfluthahn mit Vorflutkanal (Ansicht) in Öffnungsstellung,
- **Fig. 4**: einen Vorfluthahn mit Ausnehmung (Draufsicht) in Öffnungsstellung,
- **Fig. 5**: ein Küken mit Ausnehmung in Zwischenstellung (Vorflutstellung),
- **Fig. 6**: einen Vorfluthahn (Draufsicht) in Öffnungsstellung.
- **Fig. 7**: einen Vorfluthahn mit Ausnehmung (Ansicht) in Öffnungsstellung,
- **Fig. 8**: die Verriegelungsvorrichtung in Schließstellung und
- **Fig. 9**: die Verriegelungsvorrichtung mit angelenktem Stellhebel.

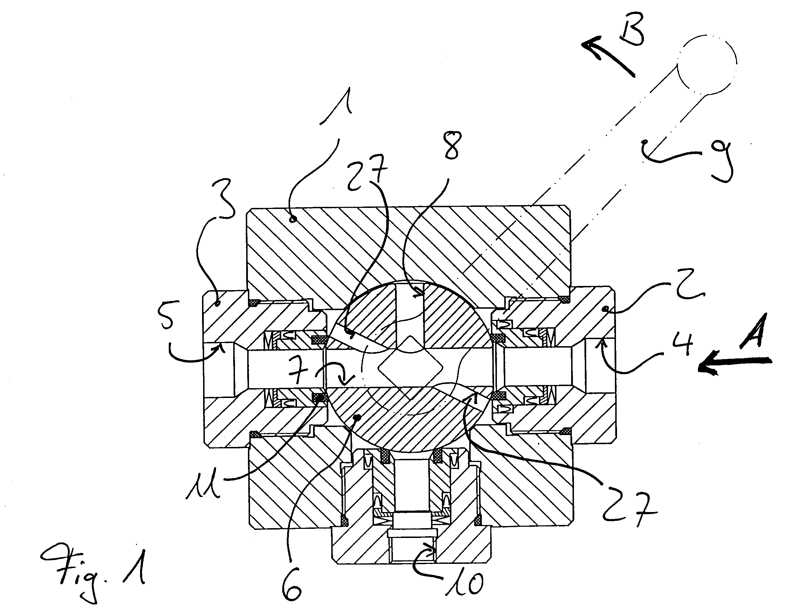

In **Figur 1** ist ein geöffneter Vorfluthahn in einem Schnitt durch das Gehäuse 1 dargestellt. Der Vorfluthahn weist einen Einlaßstutzen 2 und einen Auslaßstutzen 3 mit jeweils einem Flansch auf, die in das Gehäuse 1 eingeschraubt sind. Die Fließrichtung des Mediums ist mit einem Pfeil A dargestellt. Durch den Vorfluthahn führt ein Hauptkanal, der von einem Einlaßkanal 4 und einem Auslaßkanal 5 gebildet wird. Im Gehäuse 1 ist ein Schließteil 6 (Hahnküken) drehbar gelagert und mit Dichtungen 11 gegen die Wand des Gehäuses 1 abgedichtet. Das Hahnküken 6 weist einen Durchgangskanal 7 auf. Durch Drehen des Hahnkükens 6 um 90° wird in bekannter Weise der Durchfluß durch den Hauptkanal 4, 5 unterbrochen.

Die dargestellte Ausführungsform des Vorfluthahns weist eine Entlastungsbohrung 8 auf, die in das Küken 6 senkrecht zur Achse der Durchlaßbohrung 7 eingebracht ist. Beim Schließen des Vorfluthahnes, das durch eine Drehung in unterbrochener Linie angedeuteten Stellhebels 9 um 90° in Richtung von Pfeil B geschieht, tritt die Entlastungsbohrung 8 vor den Auslaßkanal 5 und der Durchgangskanal 7 vor eine Entlastungsöffnung 10 im Gehäuse 1. Das in der Hinterdruckleitung befindliche unter Restdruck stehende Medium kann über die Entlastungsöffnung 10 entweichen.

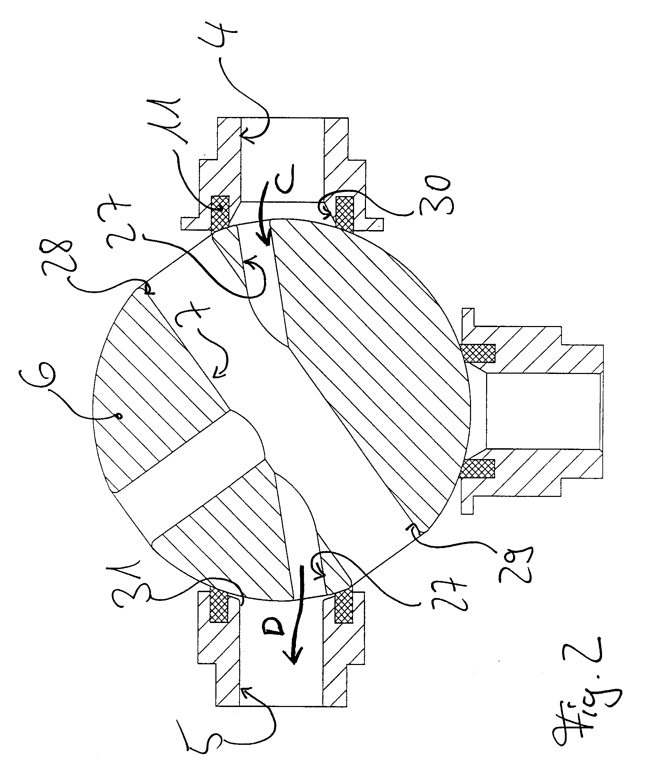

Der Durchgangskanal 7 wird von einer zylindrischen Durchgangsbohrung gebildet. In der Ebene des Durchgangskanals 7 ist eine Vorflutbohrung 27 in einem Schnittwinkel von etwa 30° zum Durchgangskanal 7 in das Schließteil 6 eingebracht. Dabei durchdringt die Vorflutbohrung 27 den Durchgangskanal 7, da sie schräg im Durchgangskanal 7 mündet und sich in axialer Verlängerung auf der gegenüberliegenden Seite fortsetzt. Der Schnittwinkel zwischen der Vorflutbohrung 27 und dem Durchgangskanal ist dabei so bemessen, daß in der Zwischenstellung (**Figur 2**) die Mündungsöffnungen 28 und 29 des Durchgangskanals 7 neben den die Mündungsöffnungen 30 und 31 der Hauptkanäle 4 und 5 umgebenden Dichtungen 11 zu liegen kommen. Auf diese Weise dichten die Dichtungen 11 in der Zwischenstellung gegen das Schließteil 6 ab.

Die Funktionsweise der Vorflutbohrung 27 ist in Figur 2 dargestellt, wo das Küken 6 in der Zwischenstellung gezeigt ist. Um in die Vorflutstellung zu gelangen, muß das Küken 6 um etwa 50° aus der Schließstellung herausgedreht werden. In dieser Stellung wird keine der Dichtungen 11 vom Medium beaufschlagt. Entlang des Pfeiles C gelangt das Medium aus dem Einlaßkanal 4 über den Vorflutkanal 27 in den Durchlaßkanal 7 und von dort über die gegenüberliegende Mündung in die Fortführung des Vorflutkanales 7 bis in den Auslaßkanal 5 (Pfeil D).

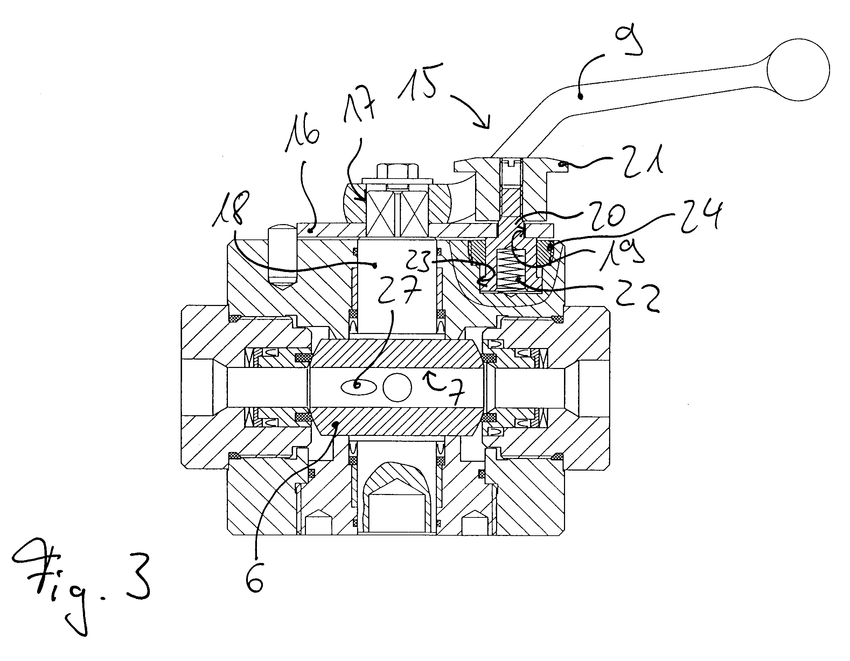

In **Figur 3** ist ein seitlicher Schnitt durch einen Vorfluthahn in geöffneter Stellung gezeigt. Zu erkennen ist, daß die Vorflutbohrung 27 in der Ebene senkrecht zur Drehachse des Kükens 6 und in der Achse des Durchgangskanales 7 liegt. Dabei zeigt die Mündung der Vorflutbohrung 27 einen eliptischen Querschnitt.

Außerdem zeigt Figur 3 ein Verriegelungsorgan 15, das die Drehbewegung des Kükens 6 bis zur Zwischenstellung zuläßt und die weitere Bewegung blockiert. Dabei wirkt das Verriegelungsorgan 15 in dieser Ausführungsform über eine am Stellgriff 9 befestigte Stellscheibe 16 auf die Drehbewegung des Kükens 6. Die Stellscheibe 16 ist wie der Stellgriff 9 auf einen Vierkant 17 der Welle 18 in Drehrichtung kraftschlüssig aufgesetzt. In die Stellscheibe 16 ist eine Führungsnut 19 eingebracht, die von einem Sockelteil 20 eines Druckknopfes 21 durchragt ist. Das Sockelteil 20 ist axial verschieblich in einer Bohrung 23 im Gehäuse 1 gelagert und wird durch eine Feder 22 aus der Bohrung 23 in Richtung Stellscheibe 16 druckbeaufschlagt. Der Druckknopf 21 ermöglicht das manuelle Eindrücken des Sockelteiles 20 gegen den Druck einer Feder 22. Das Sockelteil 20 weist zwei verschiedene Durchmesser auf, wobei es mit dem kleineren Duchmesser in dem Druckknopf 21 steckt. Gegen Herausfallen ist das Sockelteil 20 durch eine in die Bohrung 23 eingeschraubte Hülse 24 gesichert.

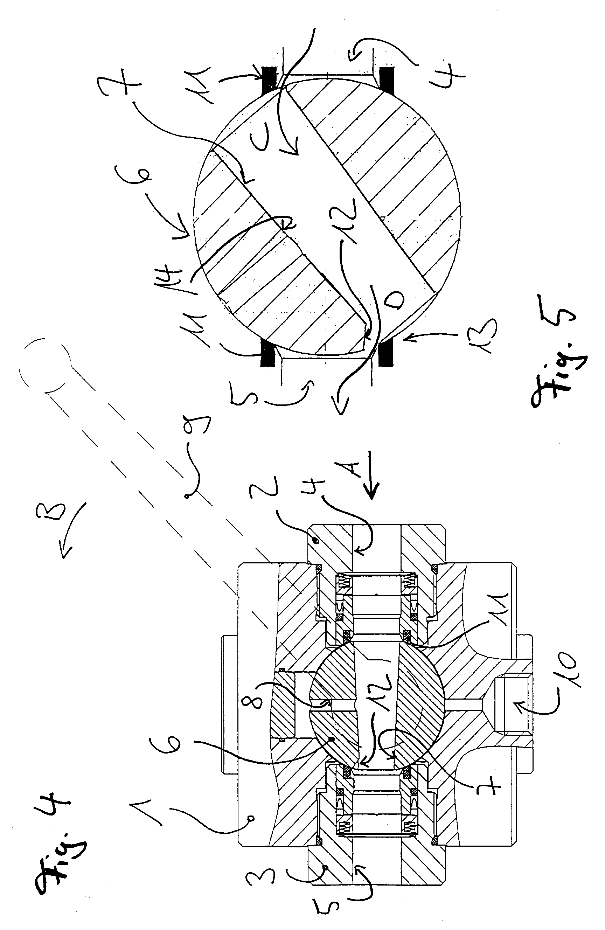

In **Figur 4** ist ein geöffneter Vorfluthahn in einem Schnitt durch das Gehäuse 1 dargestellt. Der Durchgangskanal 7 wird in dieser Ausführungsform von einer konischen Durchgangsbohrung 7 gebildet, die sich zur Auslaßseite hin verjüngt. In die Seitenwandung im Mündungsbereich des Durchgangskanals 7 ist eine Ausnehmung 12 eingebracht, die den Mündungsquerschnitt des Durchgangskanals 7 (in radialer Richtung) erweitert. Die Erweiterung beträgt dabei weniger als 20% des ursprünglich vom Ausgang des Durchlaßkanals 7 gebildeten Mündungsquerschnittes.

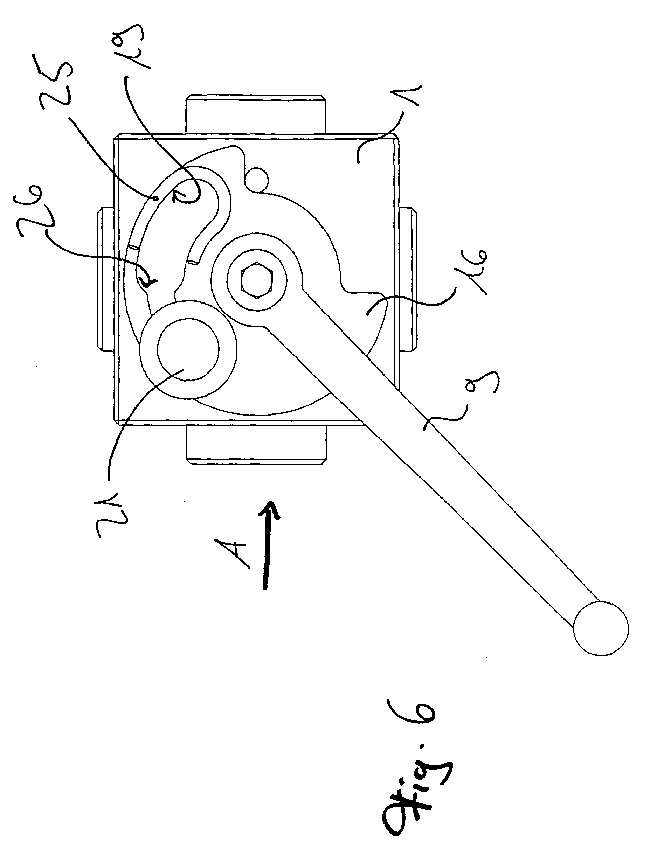

Die Funktionsweise des durch die Ausnehmung 12 gebildeten Vorflutkanals wird anhand von **Figur 5** dargestellt, wo das Küken 6 in der Vorflutstellung gezeigt ist. Um in die Vorflutstellung zu gelangen, muß das Küken 6 um etwa 50° aus der Schließstellung herausgedreht werden. Entlang des Pfeiles C gelangt das Medium vorbei an der Dichtung 11 aus dem Einlaßkanal 4 in den Durchlaßkanal 7. Von dort aus kann das Medium über die Ausnehmung 12, die im Mündungsbereich 13 von Durchlaßkanal 7 und Auslaßkanal 5 in die Seitenwand 14 eingebracht ist, in den Auslaßkanal 5 entweichen (Pfeil D). Die konische Form des Durchlaßkanals 7 bewirkt dabei, daß allein der Mündungsquerschnitt, den die Ausnehmung 12 bildet, die Größe der durch die Ausnehmung 12 gebildeten Vorabverbindung (Vorflutkanal) definiert, während der vom Rand des Durchlaßkanals 7 beschriebene kreisförmige Teil des Mündungsquerschnittes des Auslaßkanales noch durch das Gehäuse 1 abgedichtet ist.

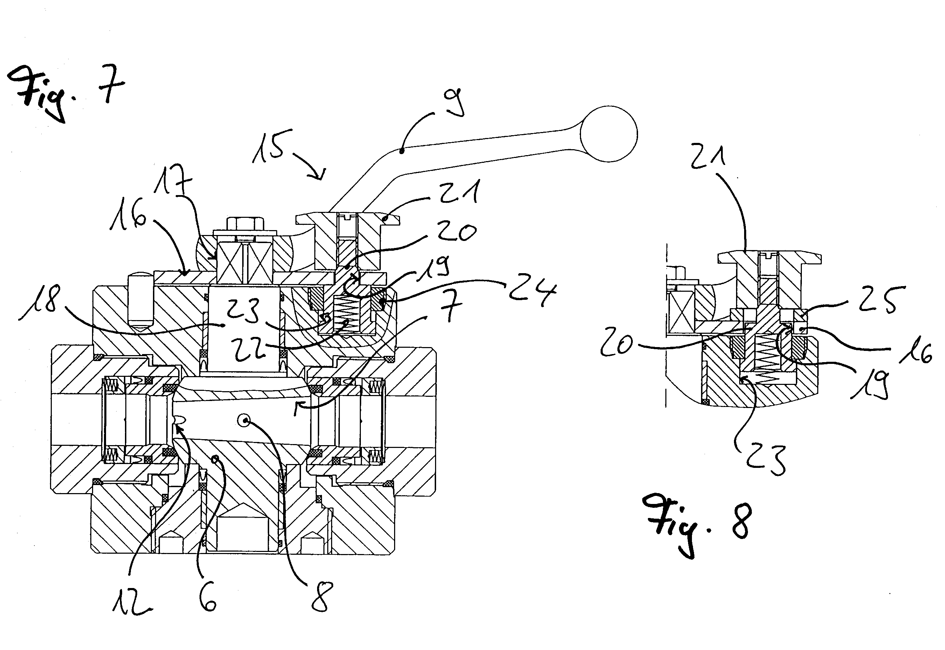

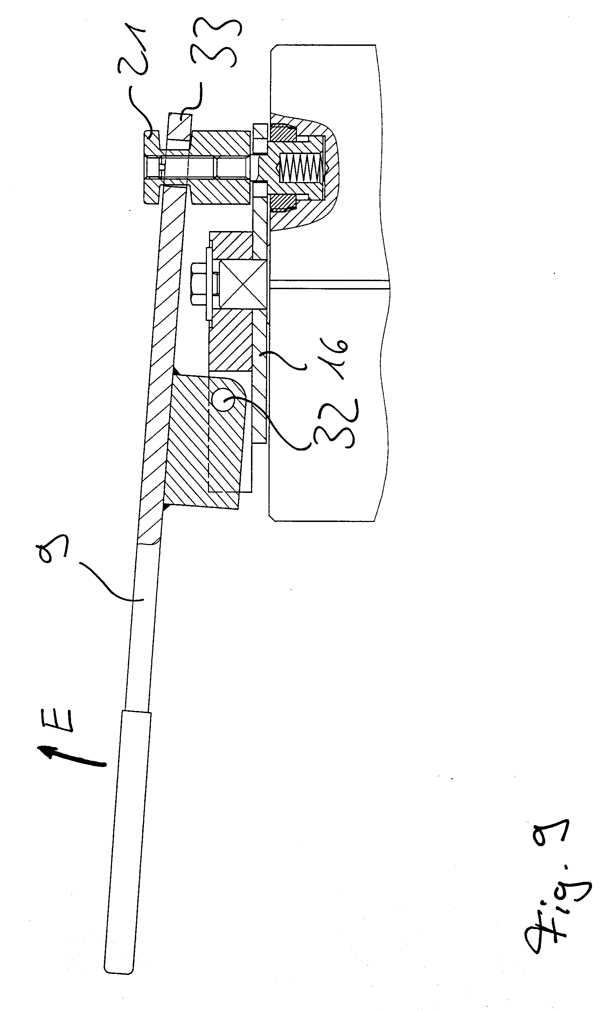

In **Figur 7** ist ein seitlicher Schnitt durch einen Vorfluthahn in geöffneter Stellung gezeigt. Zu erkennen ist, daß die Ausnehmung 12 im Küken 6 eine Nut ist, die einen halbkreisförmigen Querschnitt aufweist und die mit ihrer Achse in der Ebene senkrecht zur Drehachse des Kükens 6 liegt, in der die Achse des Durchgangskanales 7 liegt. Dabei ist die Nut in einem Winkel von etwa 45° zur Achse des Durchgangskanales 7 in die Seitenwandung des Kükens 6 eingefräst.

In den Figuren 3 und 7 ist ein Vorfluthahn mit dem Verriegelungsorgan 15 in Öffnungsstellung gezeigt, während **Figur 8** eine Schließstellug zeigt. Zu sehen ist, daß das Sockelteil 20 in der Schließstellung die Führungsnut 19 mit dem größeren Durchmesser eingreift. Der Druckknopf 21 liegt dabei auf einem die Führungsnut 19 umgebenden Wulst 25 auf und kann in dieser Stellung nicht eingedrückt werden. Soll der Vorfluthahn durch Betätigen des Stellgriffes 9 von der Schließ- in die Öffnungsstellung überführt werden, so stößt das Sockelteil 20 bei einer bestimmten Winkelstellung an einer Kante 26 (**Figur 6**) in der Führungsnut 19 an. An der Kante 26 verjüngt sich die Führungsnut 19 auf eine kleinere Weite, die dem kleineren Duchmesser des Sockelteiles 20 entspricht. In dieser Stellung (Zwischenstellung) ist der Vorflutkanal geöffnet, so daß das Medium den Vorfluthahn mit geringem Durchfluß durchströmen kann.

Aus der Zwischenstellung kann der Vorfluthahn durch alleiniges Betätigen des Stellgriffes 9 nicht in die Öffnungsstellung überführt werden. Stattdessen muß erst der Druckknopf 21 eingedrückt werden, wobei das Sockelteil 20 mit seinem größeren Durchmesser in der Bohrung 23 verschwindet. Erst jetzt kann der Stellgriff 9 weiter in die Öffnungsstellung umgelegt werden, da nun der kleinere Duchmesser des Sockelteiles 20 in die Führungsnut 19 eingreift.

Beim Schließen des Vorflutventiles wird zunächst die Zwischenstellung überfahren, der Druckknopf springt durch die Feder 22 getrieben wieder heraus und das Sockelteil 20 greift mit seinem größeren Durchmesser in die Führungsnut 19 ein. Der Wulst 25 unterfährt den Druckknopf und verhindert das Eindrücken. Das Vorflutventil befindet sich damit in seiner Schließstellung.

In **Figur 9** ist ein einhändig zu bedienender Vorfluthahn gezeigt. Dabei ist der Stellgriff 9 über ein Gelenk 32 an die Stellscheibe 16 angelenkt und greift mit seinem Ende 33 am Druckknopf 21 an. Mit einer Kippbewegung durch Zug am Stellgriffes 9 (Pfeil E) ist der Druckknopf 21 eindrückbar.

## Patentansprüche

1. Absperrorgan mit einem Gehäuse (1), in dem ein Schließteil (6) drehbar gelagert und mit einem Stellgriff (9) von einer Schließstellung in eine Öffnungsstellung überführbar ist, wobei das Schließteil einen Durchgangskanal (7) aufweist, der in der Öffnungsstellung zwei in das Gehäuse (1) eingebrachte Hauptkanäle (4,5) verbindet,
**dadurch gekennzeichnet,**
- daß in das Schließteil (6) eine durchgängige Vorflutbohrung (27) eingebracht ist, die eine Vorabverbindung für das Medium bildet, wenn sich das Schließteil (6) in einer Zwischenstellung zwischen der Öffnungs- und der Schließstellung befindet,
- daß die Zwischenstellung durch ein Verriegelungsorgan (15) definiert ist, das die Bewegung des Schließteils (6) von der Zwischen- in die Öffnungsstellung blockiert und das von einer sperrenden in eine entsperrende Stellung überführbar ist und
- daß der Durchmesser der Vorflutbohrung (27) kleiner ist als der Durchmesser des Durchgangskanals (7).

2. Absperrorgan nach Anspruch 1,
**dadurch gekennzeichnet,** daß die Vorflutbohrung (27) in der Ebene des Durchgangskanals (7) liegt und diesen mit einem Schnittwinkel von weniger als 45° durchdringt.

3. Absperrorgan nach Anspruch 1 oder 2,
**dadurch gekennzeichnet,** daß die Vorflutbohrung (27) einen Strömungsquerschnitt zwischen 10% und 20% des Strömungsquerschnittes des Durchgangskanals (7) aufweist.

4. Absperrorgan nach einem der vorherigen Ansprüche,
**dadurch gekennzeichnet,** daß der Schnittwinkel zwischen der Vorflutbohrung (27) und dem Durchgangskanal so bemessen ist, daß in der Zwischenstellung die Mündungsöffnungen des Durchgangskanals (7) außerhalb der die Mündungsöffnungen der Hauptkanäle (4,5) umgebenden Dichtungen (11) liegen.

5. Absperrorgan mit einem Gehäuse (1), in dem ein Schließteil (6) drehbar gelagert und mit einem Stellgriff (9) von einer Schließstellung in eine Öffnungsstellung überführbar ist, wobei das Schließteil einen Durchgangskanal (7) aufweist, der in der Öffnungsstellung zwei in das Gehäuse (1) eingebrachte Hauptkanäle (4,5) verbindet,
**dadurch gekennzeichnet,**
- daß mindestens einer der Hauptkanäle (4,5) und/oder der Duchgangskanal (7) in der Seitenwandung im Mündungsbereich eine Ausnehmung (12) aufweist, die den Mündungsquerschnitt vergrößert und eine Vorabverbindung für das Medium bildet, wenn sich das Schließteil (6) in einer Zwischenstellung zwischen der Öffnungs- und der Schließstellung befindet,
- daß der Strömungsquerschnitt der Vorabverbindung weniger als der fünfte Teil des Strömungsquerschnittes des Kanals ist und
- daß die Zwischenstellung durch ein Verriegelungsorgan (15) definiert ist, das die Bewegung des Schließteils (6) von der Zwischen- in die Öffnungsstellung blockiert und das von einer sperrenden in eine entsperrende Stellung überführbar ist.

6. Absperrorgan nach Anspruch 5,
**dadurch gekennzeichnet,** daß der Strömungsquerschnitt der Vorabverbindung kleiner als der zehnte Teil des Strömungsquerschnittes des Durchgangskanals (6) ist.

7. Absperrorgan nach Anspruch 5 oder 6,
**dadurch gekennzeichnet,** daß die Ausnehmung (12) eine Nut ist, die in einer Ebene senkrecht zur Drehachse des Schließteiles (6) schräg in die Seitenwandung eingebracht ist.

8. Absperrorgan nach einem der Ansprüche 5 bis 7,
**dadurch gekennzeichnet,** daß die Ausnehmung (12) in die Seitenwandung des Duchgangskanals (7) eingebracht ist

9. Absperrorgan nach einem der Ansprüche 5 bis 8,
**dadurch gekennzeichnet,** daß der Durchgangskanal (7) eine konische Bohrung im Schließteil (6) ist, die sich in Durchlaßrichtung (A) verjüngt

10. Absperrorgan nach Anspruch 9,
**dadurch gekennzeichnet,** daß die Ausnehmung (12) in das verjüngte Ende des Durchgangskanals (7) eingebracht ist.

11. Absperrorgan nach einem der vorherigen Ansprüche,
**dadurch gekennzeichnet,** daß das Verriegelungsorgan (15) über eine am Stellgriff (9) befestigte Stellscheibe (16) auf das Schließteil (6) wirkt.

12. Absperrorgan nach einem der vorherigen Ansprüche,
**dadurch gekennzeichnet,** daß das Verriegelungsorgan (15) ein am Gehäuse (1) befestigter und gegen den Druck einer Feder (22) beaufschlagbarer Druckknopf (21) ist, dessen Sockelteil (20) eine in Umfangsrichtung in die Stellscheibe (16) eingebrachte Führungsnut (19) durchragt und der in axialer Richtung zwei verschiedene Durchmesser aufweist.

13. Absperrorgan nach einem der vorherigen Ansprüche,
**dadurch gekennzeichnet,** daß die Führungsnut (19) zwei den Durchmessern des Sockelteiles (20) entsprechende Weiten aufweist, so daß das Sockelteil (20) bei der Betätigung des Stellgriffes (9) in Öffnungsstellung mit seinem größeren Durchmesser am Übergang von der größeren zur geringeren Weite der Führungsnut (19) anstößt, bis durch Druck auf den Druckknopf (21) das Sockelteil (20) mit seinem kleineren Durchmesser die Führungsnut (19) durchragt.

14. Absperrorgan nach einem der vorherigen Ansprüche,
**dadurch gekennzeichnet,** daß die Stellscheibe (16) an der Stelle der größeren Weite der Führungsnut (19) eine eine wulstartige Vestärkung (25) aufweist, so daß der Druckknopf (21) gegen das Eindrücken gesichert ist.

15. Absperrorgan nach einem der vorherigen Ansprüche,
**dadurch gekennzeichnet,** daß der Stellgriff (9) an die Stellscheibe angelenkt ist und mit einem Ende am Druckknopf angreift, so daß durch eine Kippbewegung des Stellgriffes der Druckknopf eindrückbar ist.

16. Absperrorgan nach einem der vorherigen Ansprüche,
**dadurch gekennzeichnet,** daß das Verriegelungsorgan (15) eine ungehinderte Bewegung des Schließteils (6) von der Öffnungs- in die Schließstellung erlaubt.

17. Absperrorgan nach einem der vorherigen Ansprüche,
**dadurch gekennzeichnet,** daß das Schließteil (6) eine von der Durchgangsbohrung (7) ausgehende Entlastungsbohrung (8) aufweist, die in Schließstellung den hinterdruckseitigen Hauptkanal mit einer Entlastungsöffnung (10) im Gehäuse (1) verbindet.
